# EUROPÄISCHE PATENTSCHRIFT

(11) **EP 3 237 769 B1**
(45) Veröffentlichungstag und Bekanntmachung des Hinweises auf die Patenterteilung: **12.02.2020**
(21) Anmeldenummer: 15807858.4
(22) Anmeldetag: 08.12.2015
(51) Int. Cl.: F16C 17/02

(54) **FOLIENLAGER, VERFAHREN ZUM EINSTELLEN EINER SPALTGEOMETRIE EINES FOLIENLAGERS UND ENTSPRECHENDES HERSTELLUNGSVERFAHREN EINES FOLIENLAGERS**
FOIL BEARING, METHOD FOR SETTING A GAP GEOMETRY OF A FOIL BEARING, AND CORRESPONDING PRODUCTION METHOD OF A FOIL BEARING
PALIER-FEUILLE, PROCÉDÉ POUR AJUSTER UNE GÉOMÉTRIE D'INTERVALLE D'UN PALIER-FEUILLE ET PROCÉDÉ APPROPRIÉ DE FABRICATION D'UN PALIER-FEUILLE

(30) Priorität: 22.12.2014 DE 102014226840
(43) Veröffentlichungstag der Anmeldung: 01.11.2017
(73) Patentinhaber: Robert Bosch GmbH, 70442 Stuttgart (DE)
(72) Erfinder: VOGT, Andreas, 71272 Renningen (DE)
(86) Internationale Anmeldenummer: PCT/EP2015/078950
(87) Internationale Veröffentlichungsnummer: WO 2016/102182

(56) Entgegenhaltungen:
- WO-A1-2014/070046
- CN-A- 103 335 019
- CN-A- 104 653 598
- RU-A- 2012 146 614
- RU-A- 2013 148 493
- US-A- 6 024 491

## Beschreibung

Die Erfindung betrifft ein Folienlager, ein Verfahren zum Einstellen einer Spaltgeometrie eines Folienlagers und ein entsprechendes Herstellungsverfahren eines Folienlagers.

### Stand der Technik

Folienlager werden bei einer Vielzahl von Anwendungen eingesetzt, besonders in hochdrehenden Anwendungen, zum Beispiel in thermischen Strömungsmaschinen, Turboladern, Kompressoren usw.

Folienlager sind ein spezieller Typ von Gleitlagern. Es sind aerodynamische Lager, die für hohe Drehzahlen ausgelegt sind. Folienlager der ersten Generation bestehen aus der sogenannten Deckfolie, der Wellfolie und dem Lagerrücken. Zur Verbesserung der Stabilität einer Welle in diesem Lagerrücken werden über den Umfang verteilt mehrere, typischerweise drei Vorspannelemente (z. B. Materialstreifen mit rechteckigem Querschnitt und der Länge der Lagerbreite, sogenannte "shims") zwischen dem Lagerrücken und der Wellfolie eingelegt. Ohne derartige Vorspannelemente erfolgt der aerodynamische Druckaufbau nur an einer Stelle in Wellenumfangsrichtung, nämlich dort, wo die Welle durch eine äußere Kraft bedingt an der Deckfolie anliegt. Mit den Vorspannelementen erfolgt der Druckaufbau hingegen an z.B. drei Stellen am Umfang.

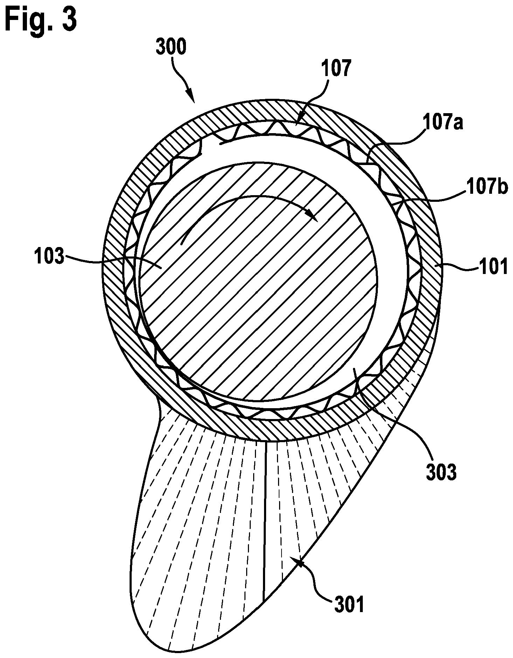

Figur 3 zeigt eine schematische Ansicht zur Erläuterung eines beispielhaften Folienlagers 300 ohne Vorspannelemente.

Das Folienlager 300 weist einen Lagerrücken 101, eine Welle 103, eine Folienanordnung 107 mit einer Deckfolie 107b sowie einer Wellfolie 107a auf. Die Folienanordnung 107 ist in einem Spalt 303 zwischen der Welle 103 und dem Lagerrücken 101 angeordnet. In Fig. 3 liegt die Welle 103 nur an einem Querschnittspunkt an der Deckfolie 107b an. Dadurch entsteht ein sich in Umfangsrichtung verengender Spalt 303, in dem sich der hydro- bzw. aerodynamische Druck aufbauen kann. Die Druckverteilung in dem Folienlager ist mit der Kurve 301 schematisch skizziert.

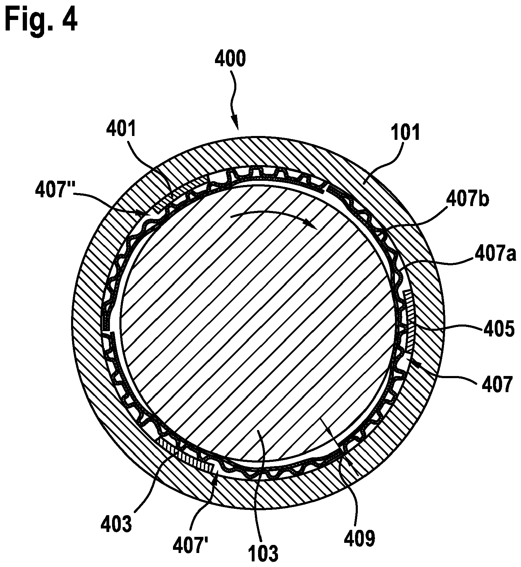

In der Figur 4 ist ein weiteres beispielhaftes Folienlager 400 mit Vorspannelemente 401, 403, 405 dargestellt.

Das Folienlager 400 weist einen Lagerrücken 101, eine Welle 103, eine Folienanordnung 407, 407', 407" mit jeweils einer Deckfolie 407b und einer Wellfolie 407a auf. Die Folienanordnung 107 ist in einem Spalt 409 zwischen der Welle 103 und dem Lagerrücken 101 angeordnet. Zur Stabilisierung der Welle sind in dem Spalt zusätzlich die Vorspannelemente 401, 403, 405 angeordnet.

In Figur 4 ist zu erkennen, dass durch die Vorspannelemente 401, 403, 405 über den Lagerumfang an mehreren Stellen sich verengende Spalte zwischen der Welle 103 und der Deckfolie 407b entstehen. An jeder dieser Verengung baut sich jeweils ein aerodynamischer Druck auf, welcher die Welle trägt und sie in radialer Richtung positioniert. Die Position und die Höhe der Vorspannelemente 401, 403, 405 legen die Geometrie des Aufbaus fest. Nach der Montage der Folienanordnung 407, 407', 407" und der Vorspannelemente 401, 403, 405 ist die Geometrie des Lagers 400 jedoch nicht mehr veränderbar, die Lage und die Stärke der Druckverläufe sind dann nur noch von den Betriebsbedingungen (Geschwindigkeit, Viskosität des Mediums und der Temperatur) abhängig.

Die US 2004/0042691 A1 offenbart ein Folienlager mit einer Mehrzahl an ringsegmentförmigen Folien, welche in einem Spalt zwischen einer Welle und einem Lagerrücken angeordnet sind. Der Lagerrücken ist dabei von Pins durchbohrt, wobei die Länge, mit der die Pins aus dem Lagerrücken herausragen, von einem dem Lagerrücken umgebenden drehbaren Ring eingestellt werden kann.

Die US 2003/0118257 A1 zeigt ein Folienlager mit einer Vielzahl von piezoelektrischen Aktuatoren. Das Folienlager umfasst ein Gehäuse sowie eine Mehrzahl an Folien zum Tragen einer rotierenden Welle. Die piezoelektrischen Aktuatoren sind dazu eingerichtet, die Steifheit und den Dämpfungskoeffizienten des Lagers einzustellen.

Die WO 2014/070046 A1 offenbart ein Foliensegmentlager mit drei in einem Lagerrücken angeordneten Lagersegmenten, die eine Lagerfläche mit einem einstellbaren Umfang definieren. Ein Einstellmechanismus, der eingerichtet ist, eine Geometrie eines Spalts zwischen einer gelagerten Welle und der Lagerfläche über eine radial Positionierung der Lagersegmente einzustellen, weist in ein Gewinde im Lagerrücken geschruabte, in axialer Richtung positionierbare Schraubbolzen auf, die jeweils ab einem Lagersegment angreifen. Zwischen den Lagersegmenten und der Welle befindet sich eine vier Folien umfassende Folienanordnung. Bei diesem Foliensegmentlager sind somit drei separate Lagersegmente vorgesehen, auf die der Einstellmechanismus wirkt.

Die RU 2012 146614 A offenbart ein Foliensegmentlager, das ähnlich wie das der WO 2014/070046 A1 aufgebaut ist. Das Foliensegmentlager weist eine Folienanordnung mit einer Deckfolie und einem elastischen Element auf, die sich zwischen dem Lagersegment und der Welle befindet. Das Lagersegment befindet sich zwischen der Welle und dem Lagerrücken, so dass die Folienanordnung nicht radial zum Lagerrücken hin angeordnet ist.

Die US 6 024 491 A offenbart ein Folienlager mit einem Lagerrücken in Form eines Gehäuses mit mehreren Luftkammern, die durch sich radial nach innen erstreckende Trennwände des Gehäuses voneinander getrennt sind. Eine Folie ist auf die Trennwände geschweißt, so dass die Kammern geschlossen sind. Über dieser Folie sind drei weitere Folien angeordnet. Eine Einstelleinrichtung positioniert die Folienanordnung durch Steuern des Luftdrucks in den Kammern.

Durch die CN 103335019 A ist ein Folienlager bekannt, bei dem eine erste Folie im Spalt zwischen der Welle und dem Lagerrücken radial zum Lagerrücken hin angeordnet ist. Es ist ein Einstellmechanismus vorgesehen mit einer Schraube, die über ein Zwischensegment an der ersten Folie anliegt.

Der Erfindung liegt die Aufgabe zugrunde ein Folienlager mit einem zugleich einfachen und präzisen Einstellmechanismus bereitzustellen.

### Offenbarung der Erfindung

Die Erfindung schafft ein Folienlager nach Anspruch 1, ein Verfahren zum Einstellen einer Spaltgeometrie eines Folienlagers nach Anspruch 11 und ein entsprechendes Herstellungsverfahren für ein Folienlager nach Anspruch 12.

Bevorzugte Weiterbildungen sind Gegenstand der jeweiligen Unteransprüche.

### Vorteile der Erfindung

Bei dem erfindungsgemäßen Folienlager ist zusätzlich zu den bisher verwendeten Deck- und Wellfolien in einem Folienlager eine Unterseitenfolie (sogenannte "bottom foil") eingelegt. Diese Unterseitenfolie ist zwischen dem Lagerrücken und der Wellfolie angeordnet. Eine Folienanordnung eines erfindungsgemäßen Folienlagers weist demnach eine Folienanordnung mit einer Unterseiten-, einer Trag- sowie einer Deckfolie auf.

Das Folienlager weist zudem einen Einstellmechanismus auf, mit welchem ein innerer Umfang einer Folienanordnung eingestellt werden kann.

Dabei ist der Einstellmechanismus geeignet, die Unterseitenfolie passend elastisch zu verformen. Dies resultiert in einer einstellbaren Spaltgeometrie. Der Lagerrücken wird in Umfangsrichtung und/oder in axialer Richtung an einer oder mehreren Positionen mit Bohrungen versehen. In diese Bohrungen werden Schrauben eingesetzt, die je nach Einschraubtiefe die Unterseitenfolie, die Wellfolie und auch die Deckfolie zur Lagermitte drücken. Durch diese Ausgestaltung des Einstellmechanismus ist eine besonders flexible und leicht zu handhabende Ausführungsform des Einstellmechanismus bereitgestellt.

Somit ermöglicht die vorliegende Erfindung einen Ausgleich von Fertigungstoleranzen bei der Herstellung von Folienlagern, aufgrund derer die Spaltgeometrie eines Folienlagers variieren kann. Dabei ist ein zu kleiner Spalt nachteilig für den Wirkungsgrad des Lagers, da dies zu einem Anstreifen der Ränder am Gehäuse mit anschließendem Ausfall der Strömungsmaschine führen kann. Ein zu großer Spalt hingegen reduziert die Tragkraft des Lagers. Durch das nachträgliche Einstellen der Spaltgeometrie, welches mit der vorliegenden Erfindung bereitgestellt wird, können Fertigungstoleranzen korrigiert werden und insbesondere kann die Welle in radialer Richtung positioniert werden.

Durch die flexible Einstellbarkeit der Spaltgeometrie zwischen der Welle und dem Lager kann somit auch das Tragverhalten eines Folienlagers flexibel eingestellt werden.

Gemäß einer weiteren bevorzugten Weiterbildung weist der Einstellmechanismus in Umfangsrichtung und/oder in axialer Richtung eine erste, zweite und/oder dritte Schraube auf, wodurch die Folienanordnung in axialer und/oder radialer Richtung positionierbar ist. Schrauben gewährleisten eine flexible Einstellmöglichkeit der Spaltgeometrie des Folienlagers. Schrauben sind jedoch auch hinsichtlich ihrer geringen Herstellungskosten sowie ihrer einfachen Bedienbarkeit für einen Anwender mit handelsüblichen Werkzeugen vorteilhaft.

Gemäß einer weiteren bevorzugten Weiterbildung sind die Unterseitenfolie, die Wellfolie und die Deckfolie jeweils als segmentförmige Folien ausgebildet. Unter einer segmentförmigen Folien ist dabei eine gekrümmte Folie zu verstehen, welche zumindest einen Teil eines im Wesentlichen ringförmigen Elements bildet. Die Deckfolie weist an einem ersten bzw. zweiten Ende eine erste bzw. zweite Kante auf, wobei die erste und die zweite Kante einen Winkel von mindestens 340° einschließen, d. h. die Deckfolie ist im Wesentlichen umlaufen ausgebildet und weist eine Unterbrechung von bis zu 20° auf. Die Winkelangabe 340° bezieht sich dabei auf den Kreisbogen, welcher die Deckfolie aufweist. Somit ist die Deckfolie und folglich auch die Folienanordnung lediglich näherungsweise ringförmig ausgebildet. Der Winkel zwischen der ersten Kante und der zweiten Kante der Deckfolie gewährleistet flexible Verformbarkeit der Folienanordnung. Wird der Winkel zwischen der ersten und der zweiten Kante jedoch zu klein, wirkt sich dies negativ auf die Stabilität und die Tragkraft der Folien und des Folienlagers aus. Somit stellt der genannte Winkel einen optimalen Kompromiss zwischen der Einstellbarkeit der Spaltgeometrie und der Tragkraft des Lagers dar. Die Wellfolie kann insbesondere auch an mehreren Stellen unterbrochen sein und muss nicht die gleiche Geometrie wie die Deckfolie aufweisen. Beispielsweise kann die Wellfolie derart ausgebildet sein, dass diese in Umfangsrichtung in drei Segmente unterteilt ist. Abhängig von der Anzahl der Wellfoliensegmente werden diese derart zueinander beabstandet sein, dass sich der Abstand zwischen Wellfoliensegmenten in Umfangsrichtung zu ca. 15° aufsummiert. Beispielsweise bei drei Wellfoliensegmenten wird sich zwischen jeweils zwei Wellfoliensegmenten ein Abstand von ca. 5°-10° ergeben. Mit derartigen Größenordnungen ist eine flexible und unabhängige Verformbarkeit der Wellfoliensegmente zueinander gewährleistet.

Gemäß einer weiteren bevorzugten Weiterbildung ist der Einstellmechanismus zumindest teilweise in dem Lagerrücken angeordnet. Die Anordnung in dem Lagerrücken gewährleistet eine leichte Zugänglichkeit für einen Anwender, der somit die Spaltgeometrie eines erfindungsgemäßen Folienlagers leicht einstellen kann.

Gemäß einer weiteren bevorzugten Weiterbildung weist der Einstellmechanismus eine erste Endposition und eine zweite Endpsition auf und ist zwischen der ersten und der zweiten Endposition kontinuierlich einstellbar. Die kontinuierliche Einstellbarkeit zwischen der ersten und der zweiten Position gewährleistet eine flexible Einstellmöglichkeit, welche exakt an die vorherrschenden Bedingungen angepasst werden kann.

Gemäß einer weiteren bevorzugten Weiterbildung berührt die dritte Folie die Welle, wenn der Einstellmechanismus in seiner zweiten Position ist. Demnach ist die zweite Endposition als Anschlag ausgebildet und somit ist auch ein beliebig kleiner Spalt zwischen der Welle und dem Lagerrücken einstellbar.

Gemäß einer weiteren bevorzugten Weiterbildung erzwingt der Einstellmechanismus in seiner ersten Position einen ersten Umfang mit einem ersten Radius der Folienanordnung und in seiner zweiten Position einen zweiten Umfang mit einem zweiten Radius der Folienanordnung, wobei der erste Umfang sich vom zweiten Umfang um einen Faktor 0,999 unterscheidet. Durch diese Bandbreite eines möglichen erzwungenen Umfangs der Folienanordnung wird eine maximal mögliche Bandbreite der einstellbaren Spaltgeometrie erreicht. Dies entspricht beispielsweise einer halben Schmierfilmhöhe eines Gasfilms in einem Folienlager. Bei einer Durchgangsöffnung von 15 mm Durchmesser mit einem Lagerspiels von ca. 20 µm beträgt der Gasfilm ca. 5 - 10 µm.

Gemäß einer weiteren bevorzugten Weiterbildung ist die zweite Folie als Metallgewebe ausgebildet. Hierdurch ist die zweite Folie besonders flexibel verformbar.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Figur 1: eine schematische Querschnittsansicht eines Folienlagers gemäß einer Ausführungsform der vorliegenden Erfindung;
- Figur 2: eine schematische Querschnittsteilansicht von Figur 1;
- Figur 3: eine schematische Querschnittsansicht eines beispielhaften Folienlagers;
- Figur 4: eine schematische Querschnittsansicht eines beispielhaften Folienlagers.

### Ausführungsformen der Erfindung

In den Figuren bezeichnen gleiche Bezugszeichen gleiche bzw. funktionsgleiche Elemente.

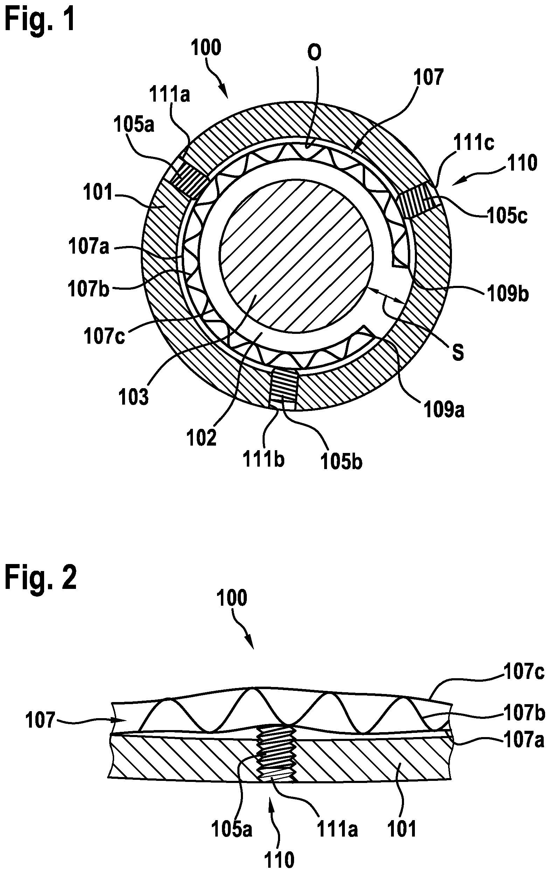

Figur 1 zeigt eine schematische Querschnittsansicht eines Folienlagers 100 gemäß einer Ausführungsform der vorliegenden Erfindung.

Dabei wird das Folienlager 100 von einem Lagerrücken 101 begrenzt. Innerhalb des Lagerrückens 101 ist der Einstellmechanismus 110 angeordnet und durch Schrauben 105a-c, welche jeweils in einer Bohrung 111a-c angeordnet sind, ausgebildet. Innerhalb des Lagerrückens ist eine Durchgangsöffnung 102 ausgebildet, in welcher eine Welle 103 mittig angeordnet ist. Die Welle 103 ist von einem gleichmäßigen Spalt S mit in Umfangsrichtung konstanter Breite umgeben. Innerhalb des Spalts, zwischen einer inneren Oberfläche O des Lagerrückens 101 und der Welle 103 ist die Folienanordnung 107 ausgebildet. Die Folienanordnung 107 umfasst drei Folien, eine erste Folie 107a, eine zweite Folie 107b und eine dritte Folie 107c. Dabei ist die erste Folie 107a als Unterseitenfolie, die zweite Folie 107b als Wellfolie und die dritte Folie 107c als Deckfolie ausgebildet.

In dieser Ausführungsform sind die Folien 107a-c zylindersegmentförmig ausgebildet. Es sei jedoch darauf hingewiesen, dass die Folien 107a-c auch von anderer Form sein können, ohne den Schutzbereich der Erfindung zu verlassen. Die Folien 107a-c weisen jeweils eine erste Kante 109a sowie eine zweite Kante 109b auf. Die Kanten 109a und 109b schließen in der nicht maßstabsgetreuen Zeichnung einen Winkel von 320° bzw. 40° ein. Das heißt, dass die Folien einen Winkel von 320° eines Vollkreises umlaufen und dass in dem Restbereich von 40° keine Folien angeordnet sind. In der Praxis wird sich in der Regel ein Winkel von ca. 345° ergeben.

In Figur 1 ist der Einstellmechanismus 110 bzw. die Schrauben 105a-c in einer ersten Position gezeigt, in der die Schrauben 105a-c bündig mit der inneren Oberfläche des Lagerrückens abschließen. Somit liegen die Folien 107a-c an der inneren Oberfläche O des Lagerrückens 101 an und ein maximal breiter Spalt S ist durch den Einstellmechanismus 110 bzw. durch die Schrauben 105a-c eingestellt.

Figur 2 zeigt eine schematische Querschnittsansicht eines Ausschnittes eines Folienlagers 100 gemäß Figur 1.

In Figur 2 ist der Einstellmechanismus 110 durch eine Schraube 105a ausgebildet. Figur 2 zeigt die Schraube 105a in einer weiteren Position, welche von der ersten Position gemäß Figur 1 verschieden ist. Dabei ist die Schraube 105a tiefer in die Bohrung 111a des Lagerrückens 101 hineingeschraubt, so dass diese nicht mehr bündig mit der inneren Oberfläche des Lagerrückens 101 abschließt, sondern aus dieser hervorsteht. Somit wird die Folienanordnung 107 durch die Schraube 105a von der inneren Oberfläche O des Lagerrückens 101 weggedrückt. Demnach wird ein geringerer Umfang der Folienanordnung 107 erzwungen.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuternden Beispiele beschränkt.

Das Design des Folienlagers ist nicht auf die oben beschriebenen Ausführungsformen beschränkt, sondern kann beliebig an die jeweilige Applikation angepasst werden. Beispielsweise können die Anzahl der Schrauben eines Einstellmechanismus an die vorherrschenden Gegebenheiten angepasst werden. Ferner ist die Form des Folienlagers, des Lagerrückens, der Folienanordnung sowie der Welle nicht auf die dargestellte Zylinderform beschränkt.

Die Erfindung kann bei allen Folienlagern angewendet werden, deren Aufbau eine Wellfolie (sogenannte "bump foil") und eine Deckfolie (sogenannte "top foil") beinhaltet. Außerdem kann die Erfindung auch bei sogenannten "mesh foil"-Lagern angewendet werden. Bei einem "mesh foil"-Lager ist die Wellfolie durch ein Metallvlies ersetzt.

## Patentansprüche

1. Folienlager (100) aufweisend:
einen Lagerrücken (101) mit einer Durchgangsöffnung (102), wobei eine Welle (103) in der Durchgangsöffnung derart anordbar ist, dass zwischen der Welle (103) und dem Lagerrücken (101) ein Spalt (S) besteht,
eine Folienanordnung (107) mit einem ersten inneren Umfang (U), aufweisend eine erste, segmentförmige Folie (107a), welche in dem Spalt (S) zu dem Lagerrücken (101) benachbart angeordnet ist, eine dritte, segmentförmige Folie (107c),
welche in dem Spalt (S) zwischen der Welle (103) und der ersten Folie (107a) angeordnet ist, und eine zweite, segmentförmige Folie (107b), welche in dem Spalt (S) zwischen der ersten Folie (107a) und der dritten Folie (107c) angeordnet ist, sowie einen Einstellmechanismus (110) zum Einstellen des ersten inneren Umfangs (U) der Folienanordnung (107), **dadurch gekennzeichnet, dass** der Einstellmechanismus (110) eine erste, an der ersten Folie (107a) angreifende Schraube (105a) aufweist, wodurch die Folienanordnung (107) in axialer und/oder radialer Richtung positionierbar ist.

2. Folienlager (100) nach Anspruch 1, wobei die erste Schraube (105a) ausgebildet ist, die erste, segmentförmige Folie (107a) vom Lagerrücken (101) wegzudrücken.

3. Folienlager (100) nach einem der vorstehenden Ansprüche, wobei der Einstellmechanismus (110) die erste und eine zweite Schraube (105a, 105b) oder die erste, eine zweite und eine dritte Schraube (105a, 105b, 105c) aufweist, wodurch die Folienanordnung (107) in axialer und/oder radialer Richtung positionierbar ist.

4. Folienlager (100) nach einem der vorstehenden Ansprüche, wobei die dritte, segmentförmige Folie (107c) jeweils zwischen einer ersten Kante (109a) an einem ersten Ende der Folie (107c) und einer zweiten Kante (109b) an einem zweiten Ende der Folie (107c) mindestens 340° einschließt.

5. Folienlager (100) nach einem der vorstehenden Ansprüche, wobei der Einstellmechanismus (110) zumindest teilweise in dem Lagerrücken (101) angeordnet ist.

6. Folienlager (100) nach einem der vorstehenden Ansprüche, wobei der Einstellmechanismus (110) eine erste und eine zweite Endposition aufweist und zwischen der ersten und der zweiten Endposition kontinuierlich einstellbar ist.

7. Folienlager (100) nach Anspruch 5, wobei die dritte Folie (107c) die Welle (103) berührt, wenn der Einstellmechanismus (110) in seiner zweiten Position ist.

8. Folienlager (100) nach Anspruch 5, wobei der Einstellmechanismus (110) in seiner zweiten Position einen vom ersten inneren Umfang (U) verschiedenen zweiten inneren Umfang der Folienanordnung (107) erzwingt, wobei der zweite innere Umfang um einen Faktor 0,999 gegenüber dem ersten inneren Umfang (U), wenn der Einstellmechanismus (110) in seiner ersten Position ist, reduziert ist.

9. Folienlager (100) nach einem der vorstehenden Ansprüche, wobei die zweite Folie (107b) als Metallgewebe ausgebildet ist.

10. Folienlager (100) nach einem der Ansprüche 1 bis 7, wobei die zweite Folie (107b) als Metallvlies ausgebildet ist.

11. Verfahren zum Einstellen einer Spaltgeometrie eines Folienlagers (100) mit den folgenden Schritten:
Bereitstellen eines Folienlagers (100) nach Anspruch 1,
Bestimmen eines einzustellenden und/oder vorherrschenden Betriebszustandes und/oder einer einzustellenden und/oder vorherrschenden Drehzahl einer in dem Folienlager (100) gelagerten Welle (103),
Bestimmen einer geeigneten Spaltgeometrie unter Verwendung des bestimmten Betriebszustandes und/oder der bestimmten und/oder vorherrschenden Drehzahl und
Positionieren des Einstellmechanismus (110) zum Einstellen der bestimmten Spaltgeometrie.

12. Herstellungsverfahren für ein Folienlager (100) nach einem der Ansprüche 1 bis 7, mit den folgenden Schritten:
Bereitstellen eines Lagerrückens (101),
Bereitstellen einer ersten, zweiten und dritten Folie,
Bereitstellen eines Einstellmechanismus (110),
Anordnen des Einstellmechanismus (110) innerhalb des Lagerrückens (101) und
Anordnen der Folien (107a, 107b, 107c) innerhalb eines durch den Lagerrücken (101) definierten Hohlraums.

## Claims

1. Foil bearing (100), having:
a bearing back (101) with a passage opening (102), wherein a shaft (103) can be arranged in the passage opening in such a manner that there is a gap (S) between the shaft (103) and the bearing back (101),
a foil arrangement (107) with a first inner circumference (U), having a first segment-shaped foil (107a) which is arranged in the gap (S) adjacent to the bearing back (101), a third segment-shaped foil (107c) which is arranged in the gap (S) between the shaft (103) and the first foil (107a), and a second segment-shaped foil (107b) which is arranged in the gap (S) between the first foil (107a) and the third foil (107c), and also
a setting mechanism (110) for setting the first inner circumference (U) of the foil arrangement (107), **characterized in that** the setting mechanism (110) has a first screw (105a) engaging on the first foil (107a), as a result of which the foil arrangement (107) can be positioned in the axial and/or radial direction.

2. Foil bearing (100) according to Claim 1, wherein the first screw (105a) is designed to push the first segment-shaped foil (107a) away from the bearing back (101).

3. Foil bearing (100) according to either of the preceding claims, wherein the setting mechanism (110) has the first and a second screw (105a, 105b) or the first, a second and a third screw (105a, 105b, 105c), as a result of which the foil arrangement (107) can be positioned in the axial and/or radial direction.

4. Foil bearing (100) according to one of the preceding claims, wherein the third segment-shaped foil (107c) in each case encloses at least 340° between a first edge (109a) at a first end of the foil (107c) and a second edge (109b) at a second end of the foil (107c).

5. Foil bearing (100) according to one of the preceding claims, wherein the setting mechanism (110) is at least partially arranged in the bearing back (101).

6. Foil bearing (100) according to one of the preceding claims, wherein the setting mechanism (110) has a first and a second end position and can be continually adjusted between the first and the second end position.

7. Foil bearing (100) according to Claim 5, wherein the third foil (107c) touches the shaft (103) when the setting mechanism (110) is in its second position.

8. Foil bearing (100) according to Claim 5, wherein the setting mechanism (110) in its second position forces a second inner circumference of the foil arrangement (107), which circumference is different from the first inner circumference (U), wherein the second inner circumference is reduced by a factor of 0.999 in relation to the first inner circumference (U) when the setting mechanism (110) is in its first position.

9. Foil bearing (100) according to one of the preceding claims, wherein the second foil (107b) is designed as metal fabric.

10. Foil bearing (100) according to one of Claims 1 to 7, wherein the second foil (107b) is designed as a metal fleece.

11. Method for setting a gap geometry of a foil bearing (100), with the following steps:
providing a foil bearing (100) according to Claim 1,
determining an operating state, which is to be set and/or prevails, and/or a rotational speed, which is to be set and/or prevails, of a shaft (103) mounted in the foil bearing (100),
determining a suitable gap geometry using the determined operating state and/or the rotational speed, which is determined and/or prevails, and
positioning the setting mechanism (110) in order to adjust the determined gap geometry.

12. Production method for a foil bearing (100) according to one of Claims 1 to 7, with the following steps:
providing a bearing back (101),
providing a first, second and third foil,
providing a setting mechanism (110),
arranging the setting mechanism (110) within the bearing back (101), and
arranging the foils (107a, 107b, 107c) within a cavity defined by the bearing back (101).

## Revendications

1. Palier à feuilles (100) comprenant :
un dos de palier (101) avec une ouverture de passage (102), un arbre (103) pouvant être disposé de telle façon dans l'ouverture de passage, qu'une fente (S) apparaît entre l'arbre (103) et le dos de palier (101),
un ensemble de feuilles (107) avec une première circonférence intérieure (U), comportant une première feuille en forme de segment (107a), laquelle est disposée à côté du dos de palier (101) dans la fente (S), une troisième feuille en forme de segment (107c) disposée entre l'arbre (103) et la première feuille (107a) dans la fente (S), et une deuxième feuille en forme de segment (107b) disposée entre la première feuille (107a) et la troisième feuille (107c) dans la fente (S), ainsi qu'un mécanisme de réglage (110) pour le réglage de la première circonférence intérieure (U) de l'ensemble de feuilles (107),
**caractérisé en ce que**
le mécanisme de réglage (110) comporte une première vis (105a) en prise avec la première feuille (107a), moyennant quoi l'ensemble de feuilles (107) peut être positionné dans la direction axiale et/ou radiale.

2. Palier à feuilles (100) selon la revendication 1, dans lequel la première vis (105a) est conçue pour presser la première feuille en forme de segment (107a) à distance du dos de palier (101).

3. Palier à feuilles (100) selon l'une des revendications précédentes, dans lequel le mécanisme de réglage (110) comporte la première et une deuxième vis (105a, 105b) ou la première, une deuxième et une troisième vis (105a, 105b, 105c), moyennant quoi l'ensemble de feuilles (107) peut être positionné dans la direction axiale et/ou radiale.

4. Palier à feuilles (100) selon l'une des revendications précédentes, dans lequel la troisième feuille en forme de segment (107c) forme un angle d'au moins 340° respectivement entre un premier bord (109a) à une première extrémité de la feuille (107c) et un deuxième bord (109b) à une deuxième extrémité de la feuille (107c).

5. Palier à feuilles (100) selon l'une des revendications précédentes, dans lequel le mécanisme de réglage (110) est disposé au moins partiellement dans le dos de palier (101).

6. Palier à feuilles (100) selon l'une des revendications précédentes, dans lequel le mécanisme de réglage (110) présente une première et une deuxième position finale et peut être réglé de façon continue entre la première et la deuxième position finale.

7. Palier à feuilles (100) selon la revendication 5, dans lequel la troisième feuille (107c) touche l'arbre (103) lorsque le mécanisme de réglage (110) est dans sa deuxième position.

8. Palier à feuilles (100) selon la revendication 5, dans lequel, dans sa deuxième position, le mécanisme de réglage (110) impose à l'ensemble de feuilles (107) une deuxième circonférence intérieure différente de la première circonférence intérieure (U), la deuxième circonférence intérieure étant réduite d'un coefficient de 0,999 par rapport à la première circonférence intérieure (U) lorsque le mécanisme de réglage (110) est dans sa première position.

9. Palier à feuilles (100) selon l'une des revendications précédentes, dans lequel la deuxième feuille (107b) est conçue comme une toile métallique.

10. Palier à feuilles (100) selon l'une des revendications 1 à 7, dans lequel la deuxième feuille (107b) est conçue comme un non-tissé métallique.

11. Procédé pour le réglage d'une géométrie de fente d'un palier à feuilles (100), avec les étapes suivantes :
mise à disposition d'un palier à feuilles (100) selon la revendication 1,
détermination d'un état de fonctionnement à régler et/ou préexistant et/ou d'une vitesse de rotation à régler et/ou préexistante d'un arbre (103) monté dans le palier à feuilles (100),
détermination d'une géométrie de fente appropriée à l'aide de l'état de fonctionnement déterminé et/ou de la vitesse de rotation déterminée et/ou préexistante, et
positionnement du mécanisme de réglage (110) pour le réglage de la géométrie de fente déterminée.

12. Procédé de réalisation pour un palier à feuilles (100) selon l'une des revendications 1 à 7, avec les étapes suivantes :
mise à disposition d'un dos de palier (101),
mise à disposition d'une première, d'une deuxième et d'une troisième feuille,
mise à disposition d'un mécanisme de réglage (110),
disposition du mécanisme de réglage (110) à l'intérieur du dos de palier (101), et
disposition des feuilles (107a, 107b, 107c) à l'intérieur d'un espace creux défini par le dos de palier (101).
